# EUROPÄISCHE PATENTSCHRIFT

(11) **EP 3 766 710 B1**
(45) Veröffentlichungstag und Bekanntmachung des Hinweises auf die Patenterteilung: **07.06.2023**
(21) Anmeldenummer: 20186268.7
(22) Anmeldetag: 16.07.2020
(51) Int. Cl.: B60C 23/04, B60C 23/00

(54) **VORRICHTUNG ZUR MESSUNG EINES DRUCKS EINES ZWEIRADREIFENS, INSBESONDERE EINES FAHRRADREIFENS**
DEVICE FOR MEASURING THE PRESSURE OF A TYRE FOR A TWO-WHEELED VEHICLE, IN PARTICULAR A BICYCLE TYRE
DISPOSITIF DE MESURE D'UNE PRESSION D'UN PNEU DE DEUX ROUES, EN PARTICULIER D'UN PNEU DE BICYCLETTE

(30) Priorität: 17.07.2019 DE 202019103956 U
(43) Veröffentlichungstag der Anmeldung: 20.01.2021
(73) Patentinhaber: SKS metaplast Scheffer-Klute GmbH, 59846 Sundern (DE)
(72) Erfinder: KISKER, Davor, 58675 Hemer (DE)
(74) Vertreter: Manske, Jörg

(56) Entgegenhaltungen:
- EP-A1- 3 254 873
- EP-A1- 3 492 287
- CN-A- 105 751 834

## Beschreibung

Die vorliegende Erfindung betrifft eine Vorrichtung zur Messung eines Drucks eines Zweiradreifens, insbesondere eines Fahrradreifens, eines Laufrads eines Zweirads nach dem Oberbegriff des Anspruchs 1.

Eine Vorrichtung zur Messung eines Drucks eines Zweiradreifens, insbesondere eines Fahrradreifens, eines Laufrads eines Zweirads, mit einem Sensorbauteil, das Druckmessmittel für die Messung des Drucks in der Vorrichtung und Übertragungsmittel für eine drahtlose Übertragung der dem gemessenen Druck entsprechenden Information umfasst, ist aus der DE 10 2017 128 466 A1 bereits bekannt. Diese Vorrichtung zeichnet sich insbesondere dadurch aus, dass kein speziell auf die Übertragung der Druckinformationen abgestimmtes Ventil verwendet werden muss. Die Vorrichtung kann somit auf einfache Weise mit einem bereits am Zweirad beziehungsweise Fahrrad montierten Ventil des Reifens verbunden werden. Dadurch besteht die Möglichkeit, jedes Zweirad beziehungsweise Fahrrad mit derartigen Vorrichtungen nachzurüsten. Durch das Vorsehen eines von dem Adapterbauteil separaten Sensorbauteils kann das Sensorbauteil der Vorrichtung durch die Verwendung unterschiedlicher Adapterbauteile für verschiedene Ventilarten eines Fahrrads verwendet werden. Es kann zum Beispiel vorgesehen sein, dass das Sensorbauteil mit mindestens zwei unterschiedlichen Ausführungsformen von Adapterbauteilen verbunden werden kann, wobei beispielsweise eine erste Ausführungsform eines Adapterbauteils für die Verbindung mit und zum Öffnen von Schraderventilen und/oder Dunlopventilen geeignet ist. Demgegenüber kann zum Beispiel eine zweite Ausführungsform eines Adapterbauteils für die Verbindung mit und zum Öffnen von Sclaverandventilen geeignet sein.

Bei dieser aus dem Stand der Technik bekannten Vorrichtung besteht das Problem, dass das Sensorbauteil vergleichsweise einfach ungewollt oder auch unbefugt vom Ventil gelöst werden kann, so dass folglich das Manipulations- beziehungsweise Diebstahlrisiko relativ hoch ist.

Eine weitere Vorrichtung zur Messung eines Drucks eines Zweiradreifens, die Übertragungsmittel für die drahtlose Übertragung der gemessenen Druckinformationen aufweist, ist aus der EP 3 254 873 A1 bekannt.

Eine Vorrichtung der eingangs genannten Art mit einem Sicherungsmittel, das so ausgebildet ist, dass es an dem Sensorbauteil und an zumindest einer Speiche des Laufrads anbringbar ist und das Sensorbauteil gegen ein Verdrehen relativ zu dem Ventil sichert, ist aus der CN 105 751 834 A bekannt.

Die Erfindung macht es sich daher zur Aufgabe, eine Vorrichtung zur Messung eines Drucks eines Zweiradreifens der eingangs genannten Art zur Verfügung zu stellen, bei der das Manipulationsbeziehungsweise Diebstahlrisiko verringert ist und die eine einfache Montage und eine bessere Anzeige oder Signalisierung der Reifendruckinformationen ermöglicht.

Die Lösung dieser Aufgabe liefert eine gattungsgemäße Vorrichtung mit den Merkmalen des kennzeichnenden Teils des Anspruchs 1. Die Unteransprüche betreffen vorteilhafte Weiterbildungen der Erfindung.

Erfindungsgemäß wird vorgeschlagen, dass das Sensorbauteil Übertragungsmittel für eine drahtlose Übertragung der dem gemessenen Druck entsprechenden Information umfasst und dass das Sicherungsmittel eine Montageöffnung aufweist, durch die derjenige Teil des Adapterbauteils hindurchgeführt ist, der sich aus dem Sensorbauteil heraus erstreckt. Durch das Vorsehen des Sicherungsmittels ist es in vorteilhafter Weise möglich, ein ungewolltes beziehungsweise unbefugtes Abdrehen des Sensorbauteils vom Ventil zu verhindern. Durch diese Maßnahme wird erreicht, den Manipulations- beziehungsweise Diebstahlschutz wirksam zu verbessern. Das Sensorbauteil kann bei der Montage auf sehr einfache Weise zwischen den Speichen des Laufrads angeordnet werden und mit Hilfe des Sicherungsmittels, das an zumindest einer Speiche und an dem Sensorbauteil angebracht wird, gesichert werden. Dadurch, dass das Sicherungsmittel eine Montageöffnung aufweist, durch die derjenige Teil des Adapterbauteils hindurchgeführt ist, der sich aus dem Sensorbauteil heraus erstreckt, wird insbesondere eine einfache und intuitive Montage des Sicherungsmittels an dem Adapterbauteil ermöglicht.

Es besteht die Möglichkeit, dass die Verbindungsmittel des Adapterbauteils ein Innengewinde für die Bereitstellung einer Schraubverbindung der Vorrichtung mit dem Ventil umfassen. Dadurch ergibt sich eine feste Verbindung zwischen der Vorrichtung und dem Ventil. Es besteht ferner die Möglichkeit, dass das Adapterbauteil Anschlussmittel für eine Luftpumpe aufweist, so dass mit der Luftpumpe durch die Vorrichtung und das damit verbundene Ventil der Zweiradreifen aufgepumpt werden kann. Dabei kann sich der Benutzer auch während des Aufpumpens des Reifens beispielsweise auf seinem Smartphone den aktuell herrschenden Luftdruck innerhalb des Reifens anzeigen lassen, so dass er dadurch gezielt Einfluss auf den Luftdruck nehmen kann. Beispielsweise können dabei die Anschlussmittel für die Luftpumpe auf der von den Verbindungsmitteln abgewandten Seite des Adapterbauteils angeordnet sein. Damit stellt die Vorrichtung geometrisch lediglich eine Verlängerung des Ventils dar, so dass der Benutzer den Reifen in gewohnter Weise aufpumpen kann.

Es kann vorgesehen sein, dass die Übertragungsmittel des Sensorbauteils der Vorrichtung als Funkübertragungsmittel ausgebildet sind. Insbesondere können die Übertragungsmittel für eine Funkübertragung nach einem Bluetooth-Standard geeignet sein. Dadurch können als Anzeige- und/oder Signaleinrichtungen handelsübliche Smartphones, Tabletcomputer oder auch so genannte Smartwatches verwendet werden, die in Regel allesamt dazu in der Lage sind, Informationsübertragungen nach dem Bluetooth-Standard zu verarbeiten.

In einer vorteilhaften Ausführungsform besteht die Möglichkeit, dass das Sicherungsmittel so gestaltet ist, dass es zusammen mit dem Adapterbauteil formschlüssig an dem Sensorbauteil befestigbar ist. Dadurch kann ein besonders sicherer Halt des Sicherungsmittels zusammen mit dem Adapterbauteil an dem Sensorbauteil erreicht werden.

In einer Ausführungsform kann vorgesehen sein, dass das Sicherungsmittel einen Anschlussbereich aufweist und dass das Sensorbauteil einen diesem Anschlussbereich zugewandten und damit korrespondierenden Anschlussbereich umfasst, an dem der Anschlussbereich des Sicherungsmittels nach der Montage anliegt.

In einer bevorzugten Ausführungsform wird vorgeschlagen, dass der Anschlussbereich des Sicherungsmittels und der Anschlussbereich des Sensorbauteils so geformt sind, dass die Anschlussbereiche nach der Montage formschlüssig miteinander verbunden sind. Dadurch können die Anschlussbereiche passend und vorzugsweise spielfrei aneinandergefügt werden. Die Anschlussbereiche können insbesondere zumindest abschnittsweise komplementär zueinander geformt sein.

Um einen sicheren Halt des Sicherungsmittels an dem Sensorbauteil zu erreichen, kann in einer besonders bevorzugten Ausführungsform vorgesehen sein, dass der Anschlussbereich des Sensorbauteils einen Absatz, auf dem das Sicherungsmittel nach der Montage abschnittsweise aufliegt, und eine sich an den Absatz anschließende Erhebung aufweist. Diese Erhebung bildet aus funktionaler Sicht ein Widerlager, welches auch ein Verdrehen des Sensorbauteils relativ zum Sicherungsmittel wirksam verhindern kann.

In einer Ausführungsform wird vorgeschlagen, dass das Sicherungsmittel ein Anschlussmittel aufweist, welches für den Anschluss des Sicherungsmittels an die Speiche des Laufrads eingerichtet ist. Vorzugsweise kann das Anschlussmittel so geformt sein, dass es sich nach der Montage abschnittsweise um die Speiche herum erstreckt. In einer besonders zweckmäßigen Ausgestaltung besteht die Möglichkeit, dass das Anschlussmittel hakenförmig ausgebildet ist. Die Speiche kann dann bei der Montage sehr einfach in das Anschlussmittel eingehakt werden, bevor das Sicherungsmittel mit dem Sensorbauteil verbunden wird. Das Anschlussmittel ist vorzugsweise integral mit dem Sicherungsmittel ausgebildet. Grundsätzlich kann das Anschlussmittel aber auch ein separates Bauteil sein, welches mit dem Sicherungsmittel verbunden ist.

Um einen besonders sicheren Halt zu gewährleisten, wird in einer bevorzugten Ausführungsform vorgeschlagen, dass die Vorrichtung ein Feststellmittel aufweist, mittels dessen das Sensorbauteil und das Sicherungsmittel an dem Adapterbauteil festlegbar sind. Dadurch ist es möglich, einen sicheren Halt des Sicherungsmittels und des Sensorbauteils an dem Adapterbauteil und einen sicheren Betrieb der Vorrichtung zu gewährleisten. Vorzugsweise kann das Feststellmittel als Feststellmutter ausgeführt sein, die auf Anschlussmittel des Adapterbauteils, die zum Anschluss einer Luftpumpe eingerichtet sind, aufschraubbar ist. Damit ähnelt das Feststellmittel denjenigen, mit denen ein Ventil an dem Laufrad des Zweirads befestigt werden kann, so dass die Handhabung des Feststellmittels einem Benutzer vertraut ist.

Da der Abstand zwischen der Speiche des Laufrads und dem Ventil nicht immer gleich ist und dabei insbesondere vom Durchmesser des Laufrads und von der Speichenanzahl abhängt, weist die Vorrichtung in einer vorteilhaften Ausführungsform mehrere Sicherungsmittel in unterschiedlichen Längen aufweist. Dadurch wird erreicht, dass der Benutzer bei der Montage immer das zu seinem Laufrad passende Sicherungsmittel auswählen und montieren kann.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen:
- Fig. 1: eine perspektivische Explosionsansicht einer Vorrichtung zur Messung eines Drucks eines Zweiradreifens, insbesondere eines Fahrradreifens, die gemäß einem bevorzugten Ausführungsbeispiel der vorliegenden Erfindung ausgeführt ist,
- Fig. 2: eine Explosionsseitenansicht der Vorrichtung gemäß Fig. 1,

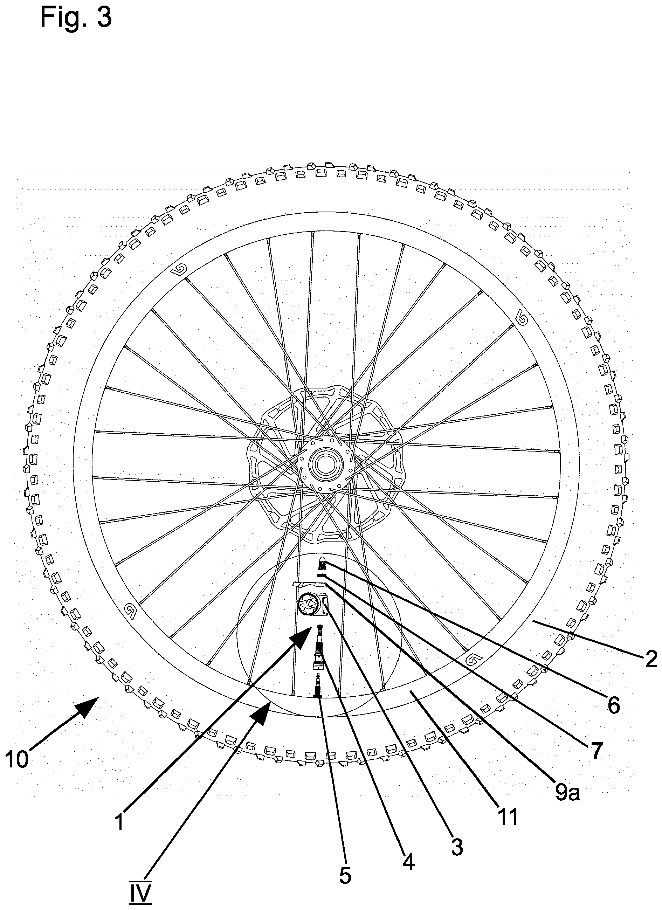

- Fig. 3: eine Seitenansicht eines Laufrads eines Zweirads, welches mit der Vorrichtung gemäß Fig. 1 ausgestattet ist, wobei die Vorrichtung in einer Explosionsseitenansicht dargestellt ist,

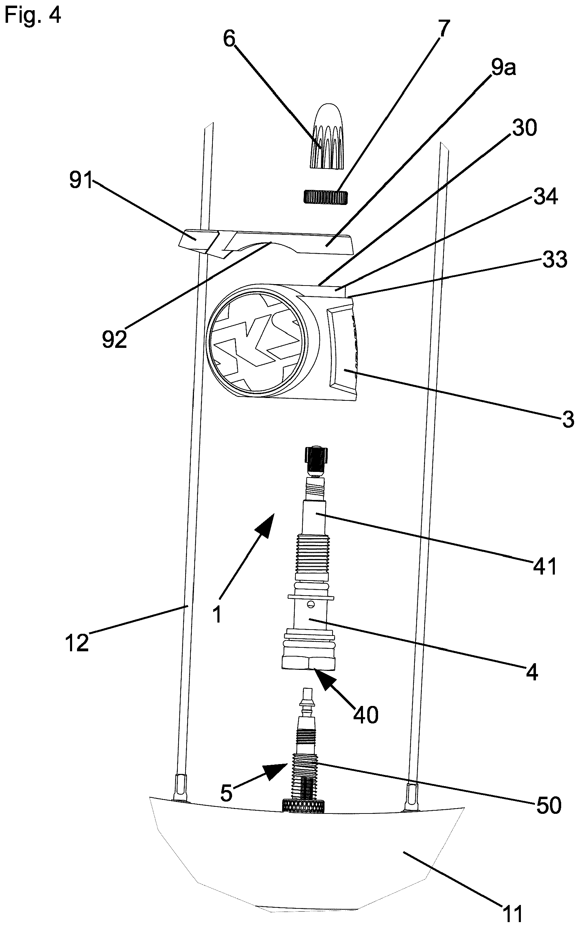

- Fig. 4: eine Detailansicht gemäß dem Pfeil IV in Fig. 3,

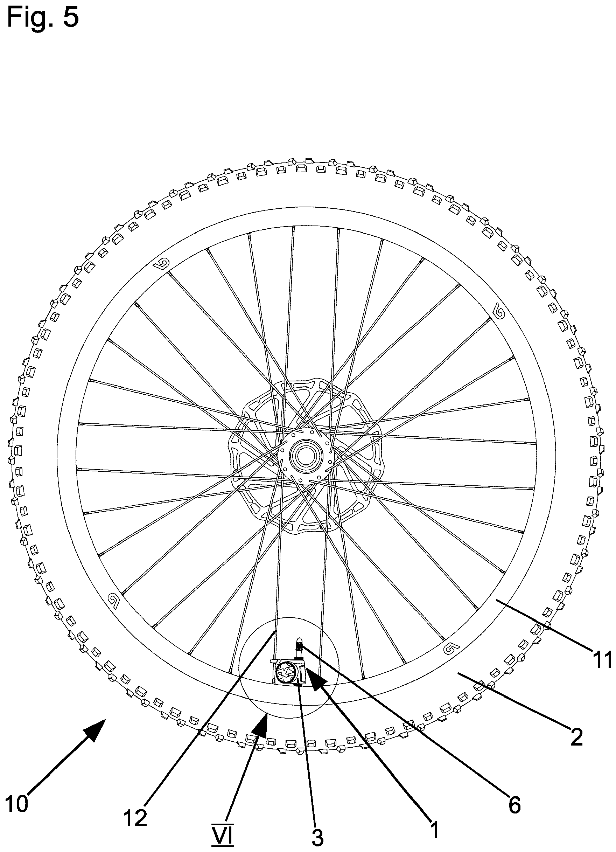

- Fig. 5: eine weitere Seitenansicht des Laufrads mit der Vorrichtung gemäß Fig. 1 in einem montierten Zustand,

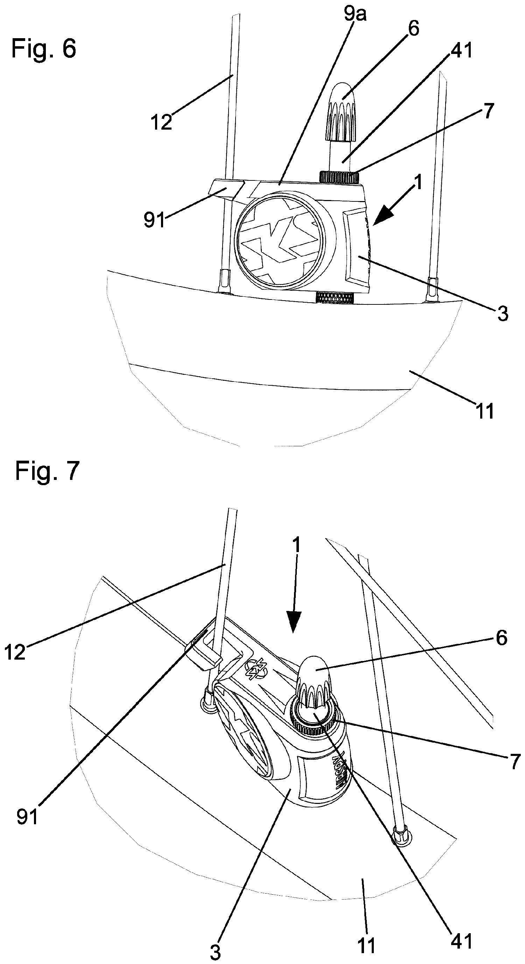

- Fig. 6: eine Detailansicht gemäß dem Pfeil VI in Fig. 5,
- Fig. 7: eine weitere Detailansicht der Vorrichtung im montierten Zustand.

Eine Vorrichtung 1 zur Messung eines Drucks eines Zweiradreifens 2, insbesondere eines Fahrradreifens, eines Laufrads 10 eines Zweirads, die gemäß einem bevorzugten Ausführungsbeispiel der vorliegenden Erfindung ausgeführt ist, umfasst ein Sensorbauteil 3 sowie ein Adapterbauteil 4, die bei der Montage miteinander verbunden werden. Das in den Figuren gezeigte Adapterbauteil 4 ist vorliegend für die Verbindung mit einem Ventil 5 geeignet, welches als Sclaverandventil ausgebildet ist. In alternativen, hier nicht explizit gezeigten Ausführungsformen kann das Adapterbauteil 4 auch so ausgebildet sein, dass es für die Verbindung mit einem Schraderventil und/oder mit einem Dunlopventil ausgebildet ist. Der grundlegende Aufbau der Vorrichtung 1 ist aus der DE 10 2017 128 466 A1 bekannt und soll nachfolgend näher erläutert werden.

Das Adapterbauteil 4 weist an einer dem Ventil 5 bei der Montage zugewandten Seite eine Aussparung 40 auf, in der ein hier nicht explizit dargestelltes Innengewinde ausgebildet ist, welches auf ein Außengewinde 50 des Ventils 5 des Zweiradreifens 2 aufgeschraubt werden kann. Die Aussparung 40 mit dem darin vorgesehenen Innengewinde bildet aus funktionaler Sicht ein Verbindungsmittel für die Verbindung des Adapterbauteils 4 mit dem Ventil 5. In der Aussparung 40 des Adapterbauteils 4 ist weiterhin mindestens ein Dichtmittel, insbesondere in Form eines O-Rings, vorgesehen, welches stirnseitig an dem Ventil 5 anliegen kann. Darüber hinaus ist in der Aussparung 40 ein in den Darstellungen ebenfalls nicht explizit erkennbarer Vorsprung angeordnet, der einen Stift zum Öffnen des Ventils 5 eindrücken kann.

Bei der Montage kann das Sensorbauteil 3 auf das Adapterbauteil 4 aufgeschoben werden. Zu diesem Zweck weist das Sensorbauteil 3 eine beidseitig offene, im Wesentlichen hohlzylindrisch geformte Aufnahmeöffnung (nicht mit Bezugszeichen versehen) auf. Das Adapterbauteil 4 kann dabei derart in die Aufnahmeöffnung eingebracht werden, dass es auf der dem Ventil 5 zugewandten Seite bündig mit dem Sensorbauteil 3 abschließt und sich auf der gegenüberliegenden Seite teilweise aus dem Sensorbauteil 3 heraus erstreckt.

Auf einer der Aussparung 40 gegenüberliegenden Seite weist das Adapterbauteil 4 Anschlussmittel 41 zum Anschluss einer Luftpumpe an das Adapterbauteil 4 auf. Die Anschlussmittel 41 erstrecken sich im verbundenen Zustand von Sensorbauteil 3 und Adapterbauteil 4 nach außen aus dem Sensorbauteil 3 heraus und sind wie ein Anschluss eines Ventils eines Fahrrads ausgebildet. In dem hier gezeigten Ausführungsbeispiel sind die Anschlussmittel 41 wie ein Sclaverandventil ausgebildet und weisen im Inneren einen Stift auf, durch dessen Eindrücken eine Fluidverbindung zu einem Innenraum der Luftpumpe hergestellt werden kann. Es besteht in alternativen Ausführungsformen auch die Möglichkeit, die Anschlussmittel 41 so auszuführen, dass diese wie ein Dunlopventil oder wie ein Autoventil gestaltet sind.

Die Anschlussmittel 41 des Adapterbauteils 4 stehen mit der Aussparung 40 in Fluidverbindung, so dass mit Hilfe der Luftpumpe durch die Vorrichtung 1 beziehungsweise durch das Adapterbauteil 4 und das damit verbundene Ventil 5 der Zweiradreifen 2 aufgepumpt werden kann. Auf die Anschlussmittel 41 ist eine Kappe 6 aufgeschraubt, beispielsweise eine Kappe wie sie üblicherweise auch bei dem adaptierten Ventil Verwendung findet.

Die hohlzylindrisch geformte Aufnahmeöffnung des Sensorbauteils 3 weist vorzugsweise eine innere Strukturierung auf, die mit einer damit korrespondierenden Strukturierung auf einer Außenseite des Adapterbauteils 4 zusammenwirkt. Die miteinander korrespondierenden Strukturierungen des Sensorbauteils 3 und des Adapterbauteils 4 greifen bei der Montage ineinander und stellen dadurch sicher, dass das Sensorbauteil 3 nur in vorgegebenen Positionen auf das Adapterbauteil 4 aufbringbar ist. Beispielsweise können die Strukturierungen so gestaltet sein, dass die Winkelabstände zwischen möglichen benachbarten Positionen etwa 10° betragen.

Die Vorrichtung 1 umfasst weiterhin zumindest ein Feststellmittel 7 für die Festlegung des Sensorbauteils 3 an dem Adapterbauteil 4 im montierten Zustand. Das Feststellmittel 7 ist in dem hier gezeigten Ausführungsbeispiel als Feststellmutter ausgebildet, die auf die Anschlussmittel 41 des Adapterbauteils 4 aufgeschraubt wird.

Die Vorrichtung 1 umfasst weiterhin Dichtmittel, die das Sensorbauteil 3 und das Adapterbauteil 4 im montierten Zustand relativ zueinander abdichten. Die Dichtmittel können zum Beispiel als zwei in axialer Richtung des Adapterbauteils 4 zueinander beabstandete O-Ringe ausgebildet sein, die in entsprechenden, auf einer Außenseite des Adapterbauteils 4 angeordneten Nuten umlaufen. Die Innenseite des Sensorbauteils 3 liegt dabei an den O-Ringen an. Dadurch ergibt sich bereits durch das Aufschieben des Sensorbauteils 3 auf das Adapterbauteil 4 eine vergleichsweise feste Verbindung zwischen dem Sensorbauteil 3 und dem Adapterbauteil 4. Diese wird dann durch das mindestens eine Feststellmittel 7 gesichert. Zwischen den beiden O-Ringen erstreckt sich von der Aussparung 40 ein radialer Kanal durch das Adapterbauteil 4 an dessen Außenseite, so dass die aus dem Ventil 5 austretende Luft zu dem Sensorbauteil 3 gelangen kann.

Das Sensorbauteil 3 umfasst ferner Druckmessmittel, die über den radialen Kanal mit der Aussparung 40 in Fluidverbindung stehen. Damit können die Druckmessmittel den Druck in der Aussparung 40 messen. Dieser Druck in der Aussparung 40 entspricht nach dem Öffnen des Ventils 5 dem Druck innerhalb des Zweiradreifens 2, so dass die Druckmessmittel nach entsprechender Verbindung der Vorrichtung 1 mit dem Ventil 5 den Druck innerhalb des Zweiradreifens 2 messen können.

Das Sensorbauteil 3 umfasst darüber hinaus Übertragungsmittel, welche die dem gemessenen Druck entsprechende Information drahtlos übertragen können. Insbesondere kann es sich um

Funkübertragungsmittel handeln, die für eine Funkübertragung nach einem Bluetooth-Standard geeignet sind. Von den Übertragungsmitteln kann die Information über die Größe des Drucks beispielsweise an ein Smartphone, einen Tabletcomputer oder eine Smartwatch übertragen werden. Dort kann dann dem Benutzer der Druck angezeigt werden oder bei Abweichung von einem Sollwert beispielsweise optisch oder akustisch signalisiert werden, dass eine Abweichung vorliegt. Es besteht in weiteren Ausführungsformen durchaus die Möglichkeit, alternative Übertragungsmittel vorzusehen, die einen anderen drahtlosen Übertragungsstandard verwenden.

Um ein ungewolltes oder auch unbefugtes Lösen des Sensorbauteils 3 zu verhindern beziehungsweise zumindest zu erschweren, weist die Vorrichtung 1 zumindest ein Sicherungsmittel 9a, 9b, 9c, 9d auf, welches dazu ausgebildet ist, die Vorrichtung 1 mit zumindest einer Speiche 12 einer Felge 11 des Laufrads 10 zu verbinden.

Da der Abstand zwischen der Speiche 12 des Laufrads 10 und dem Ventil 5 nicht immer gleich ist und dabei insbesondere vom Durchmesser des Laufrads 10 und von der Speichenanzahl abhängt, sind der Vorrichtung 1 mehrere Sicherungsmittel 9a, 9b, 9c, 9d in unterschiedlichen Längen beigelegt. Dadurch wird erreicht, dass der Benutzer bei der Montage immer das zu seinem Laufrad 10 passende Sicherungsmittel 9a, 9b, 9c, 9d montieren kann. Abgesehen von der Länge unterscheiden sich die Sicherungsmittel 9a, 9b, 9c, 9d funktional nicht voneinander.

Nachfolgend soll der Aufbau eines der Sicherungsmittel 9a, 9b, 9c, 9d näher erläutert werden. Das Sicherungsmittel 9a, 9b, 9c, 9d ist so ausgebildet, dass es zusammen mit dem Sensorbauteil 3 formschlüssig an dem Adapterbauteil 4 befestigt werden kann. Das Sicherungsmittel 9a, 9b, 9c, 9d ist in diesem Ausführungsbeispiel bügelartig geformt und weist an einem ersten Ende eine kreisförmige Montageöffnung 90 auf, durch die bei der Montage der sich aus dem Sensorbauteil 3 heraus erstreckende Teil des Adapterbauteils 4, bei dem es sich vorliegend um die Anschlussmittel 41 handelt, hindurchgeführt wird. An einem zweiten Ende des Sicherungsmittels 9a, 9b, 9c, 9d, welches dem ersten Ende gegenüberliegt, ist ein Anschlussmittel 91 ausgebildet, welches für den Anschluss des Sicherungsmittels 9a, 9b, 9c, 9d an die Speiche 12 eingerichtet ist. Das Anschlussmittel 91 ist in diesem Ausführungsbeispiel hakenförmig ausgebildet und so geformt, dass sich nach der Montage abschnittsweise um die Speiche 12 herum erstreckt und an dieser angreifen kann.

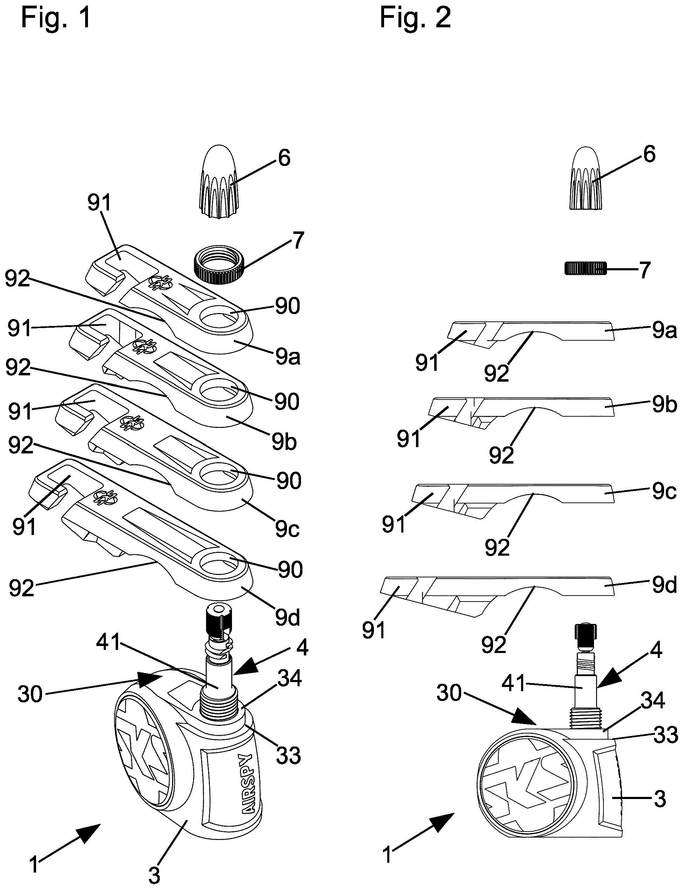

Das Sicherungsmittel 9a, 9b, 9c, 9d weist einen Anschlussbereich 92 auf, dessen Kontur an die Kontur eines damit korrespondierenden Anschlussbereichs 30 des Sensorbauteils 3 angepasst ist. Nach der Montage liegt der Anschlussbereich 92 des Sicherungsmittels 9a, 9b, 9c, 9d vorzugsweise formschlüssig an dem Anschlussbereichs 30 des Sensorbauteils 3 an, um dadurch einen sicheren Halt zu gewährleisten. Wie insbesondere in Fig. 1 und 2 zu erkennen, weist der Anschlussbereich 30 des Sensorbauteils 3 einen Absatz 33 auf, auf dem das Sicherungsmittel 9a, 9b, 9c, 9d nach der Montage aufliegt. Eine sich an den Absatz 33 anschließende Erhebung 34 verhindert, dass das Sensorbauteil 3 nach der Montage des Sicherungsmittels 9a, 9b, 9c, 9d relativ zum Ventil 5 verdreht werden kann und dadurch unbeabsichtigt beziehungsweise unbefugt gelöst werden kann. Die Erhebung 34 bildet somit aus funktionaler Sicht ein Widerlager.

Für eine finale Fixierung wird das Feststellmittel 7 bei der Montage auf die Anschlussmittel 41 des Adapterbauteils 4 aufgeschraubt, bis es an einer Oberseite des Sicherungsmittels 9a, 9b, 9c, 9d anliegt.

Durch das Vorsehen des Sicherungsmittels 9a, 9b, 9c, 9d ist es in vorteilhafter Weise möglich, ein ungewolltes beziehungsweise unbefugtes Abdrehen des Sensorbauteils 3 vom Ventil 5 zu verhindern. Durch diese Maßnahme ist es möglich, den Manipulations- beziehungsweise Diebstahlschutz für die Vorrichtung 1 wirksam zu verbessern.

## Patentansprüche

1. Vorrichtung (1) zur Messung eines Drucks eines Zweiradreifens (2), insbesondere eines Fahrradreifens, eines Laufrads (10) eines Zweirads, umfassend
- ein Adapterbauteil (4), das Verbindungsmittel für die Verbindung der Vorrichtung (1) mit einem Ventil (5) des Zweiradreifens (2) und Mittel zum Öffnen des Ventils (5) umfasst, so dass im mit dem Ventil (5) verbundenen Zustand aus dem Zweiradreifen (2) durch das Ventil (5) unter Druck stehende Luft in die Vorrichtung (1) hineinströmt, bis der Druck in der Vorrichtung (1) dem Druck in dem Zweiradreifen (2) entspricht,
- ein mit dem Adapterbauteil (4) verbindbares Sensorbauteil (3), das Druckmessmittel für die Messung des Drucks in der Vorrichtung (1) umfasst, sowie
- zumindest ein Sicherungsmittel (9a, 9b, 9c, 9d), das so ausgebildet ist, dass es an dem Sensorbauteil (3) und an zumindest einer Speiche (12) des Laufrads (10) anbringbar ist und das Sensorbauteil (3) gegen ein Verdrehen relativ zu dem Ventil (5) sichert,
**dadurch gekennzeichnet, dass** das Sensorbauteil (3) Übertragungsmittel für eine drahtlose Übertragung der dem gemessenen Druck entsprechenden Information umfasst und dass das Sicherungsmittel (9a, 9b, 9c, 9d) eine Montageöffnung (90) aufweist, durch die derjenige Teil des Adapterbauteils (4) hindurchgeführt ist, der sich aus dem Sensorbauteil (3) heraus erstreckt.

2. Vorrichtung (1) nach Anspruch 1, **dadurch gekennzeichnet, dass** das Sicherungsmittel (9a, 9b, 9c, 9d) so gestaltet ist, dass es zusammen mit dem Adapterbauteil (4) formschlüssig an dem Sensorbauteil (3) befestigbar ist.

3. Vorrichtung (1) nach einem der Ansprüche 1 oder 2, **dadurch gekennzeichnet, dass** das Sicherungsmittel (9a, 9b, 9c, 9d) einen Anschlussbereich (92) aufweist und dass das Sensorbauteil (3) einen diesem Anschlussbereich (92) zugewandten und damit korrespondierenden Anschlussbereich (30) umfasst, an dem der Anschlussbereich (92) des Sicherungsmittels (9a, 9b, 9c, 9d) nach der Montage anliegt.

4. Vorrichtung (1) nach Anspruch 3, **dadurch gekennzeichnet, dass** der Anschlussbereich (92) des Sicherungsmittels (9a, 9b, 9c, 9d) und der Anschlussbereich (30) des Sensorbauteils (3) so geformt sind, dass die Anschlussbereiche (92, 30) formschlüssig miteinander verbindbar sind.

5. Vorrichtung (1) nach einem der Ansprüche 3 oder 4, **dadurch gekennzeichnet, dass** der Anschlussbereich (30) des Sensorbauteils (3) einen Absatz (33), auf dem das Sicherungsmittel (9a, 9b, 9c, 9d) nach der Montage aufliegt, und eine sich an den Absatz (33) anschließende Erhebung (34) aufweist.

6. Vorrichtung (1) nach einem der Ansprüche 1 bis 5, **dadurch gekennzeichnet, dass** das Sicherungsmittel (9a, 9b, 9c, 9d) ein Anschlussmittel (91) aufweist, welches für den Anschluss des Sicherungsmittels (9a, 9b, 9c, 9d) an die Speiche (12) des Laufrads (10) eingerichtet ist.

7. Vorrichtung (1) nach Anspruch 6, **dadurch gekennzeichnet, dass** das Anschlussmittel (91) so geformt ist, dass sich nach der Montage abschnittsweise um die Speiche (12) herum erstreckt.

8. Vorrichtung (1) nach einem der Ansprüche 6 oder 7, **dadurch gekennzeichnet, dass** das Anschlussmittel (91) hakenförmig ausgebildet ist.

9. Vorrichtung (1) nach einem der Ansprüche 1 bis 8, **dadurch gekennzeichnet, dass** die Vorrichtung (1) ein Feststellmittel (7) aufweist, mittels dessen das Sensorbauteil (3) und das Sicherungsmittel (9a, 9b, 9c, 9d) an dem Adapterbauteil (4) festlegbar sind.

10. Vorrichtung (1) nach Anspruch 9, **dadurch gekennzeichnet, dass** das Feststellmittel (7) als Feststellmutter ausgeführt ist, die auf Anschlussmittel (41) des Adapterbauteils (4), die zum Anschluss einer Luftpumpe eingerichtet sind, aufschraubbar ist.

11. Vorrichtung (1) nach einem der Ansprüche 1 bis 10, **dadurch gekennzeichnet, dass** die Vorrichtung (1) mehrere Sicherungsmittel (9a, 9b, 9c, 9d) in unterschiedlichen Längen aufweist.

## Claims

1. Device (1) for measuring the pressure of a cycle tyre (2), in particular a bicycle tyre, of a wheel (10) of a cycle, comprising
- an adapter component (4) comprising connecting means for connecting the device (1) to a valve (5) of the cycle tyre (2) and means for opening the valve (5) such that, when said device is connected to the valve (5), pressurised air flows from the cycle tyre (2) through the valve (5) into the device (1) until the pressure in the device (1) corresponds to the pressure in the cycle tyre (2),
- a sensor component (3) which is connectable to the adapter component (4) and which comprises pressure measurement means for measuring the pressure in the device (1), and
- at least one securing means (9a, 9b, 9c, 9d) designed so as to be attachable to the sensor component (3) and at least one spoke (12) of the wheel (10) and to secure the sensor component (3) against twisting relative to the valve (5),
**characterised in that** the sensor component (3) comprises transmission means for wireless transmission of the information corresponding to the measured pressure, and **in that** the securing means (9a, 9b, 9c, 9d) has an assembly opening (90) through which that part of the adapter component (4) which extends out of the sensor component (3) is guided.

2. Device (1) according to claim 1, **characterised in that** the securing means (9a, 9b, 9c, 9d) is configured such that it can be form-fittingly fastened to the sensor component (3) together with the adapter component (4).

3. Device (1) according to any of claim 1 or 2, **characterised in that** the securing means (9a, 9b, 9c, 9d) has a coupling region (92) and **in that** the sensor component (3) comprises a coupling region (30) which faces said coupling region (92) and corresponds therewith, and against which the coupling region (92) of the securing means (9a, 9b, 9c, 9d) bears after assembly.

4. Device (1) according to claim 3, **characterised in that** the coupling region (92) of the securing means (9a, 9b, 9c, 9d) and the coupling region (30) of the sensor component (3) are shaped in such a way that the coupling regions (92, 30) can be form-fittingly connected to one another.

5. Device (1) according to any of claim 3 or 4, **characterised in that** the coupling region (30) of the sensor component (3) has a shoulder (33) on which the securing means (9a, 9b, 9c, 9d) bears after assembly, and an elevation (34) adjoining the shoulder (33).

6. Device (1) according to any of claim 1 to 5, **characterised in that** the securing means (9a, 9b, 9c, 9d) has a coupling means (91) configured to couple the securing means (9a, 9b, 9c, 9d) to the spoke (12) of the wheel (10).

7. Device (1) according to claim 6, **characterised in that** the coupling means (91) is shaped so as to extend in sections around the spoke (12) after assembly.

8. Device (1) according to any of claim 6 or 7, **characterised in that** the coupling means (91) is hook-shaped.

9. Device (1) according to any of claim 1 to 8, **characterised in that** the device (1) has a locking means (7) by means of which the sensor component (3) and the securing means (9a, 9b, 9c, 9d) can be secured to the adapter component (4).

10. Device (1) according to claim 9, **characterised in that** the locking means (7) is in the form of a locking nut which can be screwed onto coupling means (41) of the adapter component (4) which are configured for coupling an air pump.

11. Device (1) according to any of claim 1 to 10, **characterised in that** the device (1) has several securing means (9a, 9b, 9c, 9d) with different lengths.

## Revendications

1. Dispositif (1) pour mesurer une pression d'un pneu pour deux roues (2), en particulier d'un pneu de bicyclette, d'une roue (10) d'un deux-roues, comprenant
- un élément d'adaptation (4) qui comprend des moyens de connexion pour connecter le dispositif (1) à une soupape (5) du pneu de deux-roues (2) et des moyens pour ouvrir la soupape (5) de sorte que, dans l'état connecté à la soupape (5), de l'air sous pression provenant du pneu de deux-roues (2) pénètre dans le dispositif (1) à travers la soupape (5) jusqu'à ce que la pression dans le dispositif (1) soit égale à la pression dans le pneu de deux-roues (2),
- un élément de capteur (3) pouvant être relié à l'élément d'adaptation (4), lequel comprend des moyens de mesure de pression pour la mesure de la pression dans le dispositif (1), ainsi que
- au moins un moyen de fixation (9a, 9b, 9c, 9d) qui est réalisé de sorte à pouvoir être fixé sur l'élément de capteur (3) et sur au moins un rayon (12) de la roue (10) et qui fixe l'élément de capteur (3) pour empêcher une rotation par rapport à la soupape (5),
**caractérisé en ce que** l'élément de capteur (3) comprend des moyens de transmission pour une transmission sans fil de l'information correspondant à la pression mesurée et **en ce que** le moyen de fixation (9a, 9b, 9c, 9d) présente une ouverture de montage (90) à travers laquelle est passée la partie de l'élément d'adaptation (4) qui s'étend hors de l'élément de capteur (3).

2. Dispositif (1) selon la revendication 1, **caractérisé en ce que** le moyen de fixation (9a, 9b, 9c, 9d) est conçu de sorte qu'il peut être fixé par complémentarité de forme avec l'élément d'adaptation (4) sur l'élément de capteur (3).

3. Dispositif (1) selon l'une quelconque des revendications 1 ou 2, **caractérisé en ce que** le moyen de fixation (9a, 9b, 9c, 9d) présente une zone de raccordement (92) et **en ce que** l'élément de capteur (3) comprend une zone de raccordement (30) tournée vers ladite zone de raccordement (92) et correspondant à celle-ci, contre laquelle la zone de raccordement (92) du moyen de fixation (9a, 9b, 9c, 9d) prend appui après le montage.

4. Dispositif (1) selon la revendication 3, **caractérisé en ce que** la zone de raccordement (92) du moyen de fixation (9a, 9b, 9c, 9d) et la zone de raccordement (30) de l'élément de capteur (3) sont formées de sorte que les zones de raccordement (92, 30) peuvent être reliées entre elles par complémentarité de forme.

5. Dispositif (1) selon l'une quelconque des revendications 3 ou 4, **caractérisé en ce que** la zone de raccordement (30) de l'élément de capteur (3) présente un épaulement (33) sur lequel repose le moyen de fixation (9a, 9b, 9c, 9d) après le montage, et une élévation (34) se raccordant à l'épaulement (33).

6. Dispositif (1) selon l'une quelconque des revendications 1 à 5, **caractérisé en ce que** le moyen de fixation (9a, 9b, 9c, 9d) présente un moyen de raccordement (91), lequel est adapté pour le raccordement du moyen de fixation (9a, 9b, 9c, 9d) au rayon (12) de la roue (10).

7. Dispositif (1) selon la revendication 6, **caractérisé en ce que** le moyen de raccordement (91) est formé de sorte qu'il s'étend par sections autour du rayon (12) après le montage.

8. Dispositif (1) selon l'une quelconque des revendications 6 ou 7, **caractérisé en ce que** le moyen de raccordement (91) est réalisé en forme de crochet.

9. Dispositif (1) selon l'une quelconque des revendications 1 à 8, **caractérisé en ce que** le dispositif (1) présente un moyen de blocage (7) au moyen duquel l'élément de capteur (3) et le moyen de fixation (9a, 9b, 9c, 9d) peuvent être fixés sur l'élément d'adaptateur (4).

10. Dispositif (1) selon la revendication 9, **caractérisé en ce que** le moyen de blocage (7) est constitué par un écrou de blocage qui peut être vissé sur des moyens de raccordement (41) de l'élément adaptateur (4), qui sont adaptés pour le raccordement d'une pompe à air.

11. Dispositif (1) selon l'une quelconque des revendications 1 à 10, **caractérisé en ce que** le dispositif (1) présente plusieurs moyens de fixation (9a, 9b, 9c, 9d) de longueurs différentes.
